# EUROPEAN PATENT APPLICATION

(11) **EP 2 590 297 A2**
(43) Date of publication of application: **08.05.2013**
(21) Application number: 12189197.2
(22) Date of filing: 19.10.2012
(51) Int. Cl.: H02J 7/00

(54) **Apparatus and method for battery equalization**

(30) Priority: 02.11.2011 JP 2011241176
(71) Applicant: Kabushiki Kaisha Toyota Jidoshokki, Kariya-shi, Aichi 448-8671 (JP)
(72) Inventor: Suzuki, Masaaki, Kariya-shi, Aichi 448-8671 (JP); Kuraishi, Mamoru, Kariya-shi, Aichi 448-8671 (JP)
(74) Representative: TBK

(57) **Abstract**

An apparatus for battery equalization of a battery pack for use in a vehicle includes cell stack separators and cell balancers. The battery pack includes a power supply system, a plurality of cells and a plurality of cell stacks. Each cell stack includes a plurality of the cells connected in series. The cell stacks are connected in parallel to form the battery pack. Each cell stack separator is adapted to separate the corresponding cell stack from the power supply system if the difference between the maximum and the minimum of calculated internal resistances of the cells in the cell stack is greater than a predetermined threshold value. Each cell balancers is adapted to perform a battery equalization control for the cells in the separated cell stack.

## Description

### BACKGROUND OF THE INVENTION

The present invention relates to an apparatus for battery equalization of a battery pack for use in a vehicle and including a plurality of cell stacks connected in parallel and also to a method for such battery equalization.

Vehicles having an electric motor in addition to a vehicle engine as a power source, such as hybrid car, plug-in hybrid car, hybrid vehicle and hybrid electric vehicle, and transport machinery (hereinafter referred to simply as vehicle) have been put into practical use. In addition, electric vehicles driven only by an electric motor without using an engine have also been put into practical use. A battery, such as a lithium-ion battery which is compact and has a large capacity, has been used as a power source for driving the electric motor for such vehicle. For vehicle application, the battery may be constructed to be a battery pack which is composed of a plurality of cell stacks connected in parallel and each having a plurality of cells which are connected in series. The series connection of the cells allows supply of the voltage that is required to drive an electric motor for a vehicle and the parallel connection of the cell stacks allows supply of electrical current of the required capacity.

The property of a lithium-ion battery is varied greatly depending on the temperature, and the remaining capacity and charging efficiency of the lithium-ion battery are influenced greatly by the temperature in the environment where the lithium-ion battery is used. This is all the more true of the environment where the vehicle is used highly influences the lithium-ion battery.

As a result, there occurs a great variation in the remaining capacity and the output voltage of the respective cells in each cell stack. In this case, when the voltage of any one of the cells is decreased below a threshold value, power supply for the whole battery needs to be stopped or suppressed, with the result that the power efficiency is lowered. In such a case, battery equalization control for equalizing the voltage and capacity of the cell is required to be performed.

Conventionally, the battery equalization control is performed while the ignition switch of a vehicle is in its off state when the voltage of the battery is stable. When the voltage of the battery is unstable, the battery equalization control is difficult to be performed successfully. Therefore, the battery equalization control should preferably be done while the ignition key of a vehicle is off.

Thus, the cell equalization control may not be performed while a vehicle is running and, therefore, it takes a long time to perform the battery equalization control. In addition, there occurs a difference in the extent of deterioration among the adjacent cell stacks, with the result that a difference arises in the internal resistance among the cell stacks and circulating current occurs among the cell stacks. If any circulating current occurs, an excess current flows in a specific cell stack, so that there is a fear that deterioration of the cell stack is accelerated or a breakage takes place. Therefore, there has been a need to control for preventing the circulating current.

Conventionally, a fuse has been used which is adapted to cut off the circulating current among cell stacks thereby to separate the problematic cell stack from the battery. When a predetermined number of such fuses are blown out, a warning is issued in the operator's platform.

If any cell stack is separated from the battery by the fuse, the separated cell stack becomes unused despite the separated cell stack per se in still usable, which influences on the traveling performance of the vehicle and also the service efficiency of battery.

The present invention is directed to providing a battery pack including a plurality of cell stacks connected in parallel, according to which the battery equalization control for equalizing cells provided in each cell stack of the battery pack and the current balancing control for balancing the electrical currents flowing in the cell stacks may be performed efficiently.

### SUMMARY OF THE INVENTION

In accordance with the present invention, an apparatus for battery equalization of a battery pack for use in a vehicle includes cell stack separators and cell balancers. The battery pack includes a power supply system, a plurality of cells and a plurality of cell stacks. Each cell stack includes a plurality of the cells connected in series. The cell stacks are connected in parallel to form the battery pack. Each cell stack separator is adapted to separate the corresponding cell stack from the power supply system if the difference between the maximum and the minimum of calculated internal resistances of the cells in the cell stack is greater than a predetermined threshold value. Each cell balancer is adapted to perform a battery equalization control for the cells in the separated cell stack.

In accordance with the present invention, an apparatus for battery equalization of a battery pack for use in a vehicle includes current measuring devices and cell stack resistance controllers. The battery pack includes a power supply system, a plurality of cells and a plurality of cell stacks. Each cell stack includes an output terminal and a plurality of the cells connected in series. The cell stacks are connected in parallel to form the battery pack. Each current measuring device is adapted to measure a current flowing in the corresponding cell stack. Each cell stack resistance controller includes a resistance unit. Each cell stack resistance controller is adapted to control a resistance value of the resistance unit that is connectable in series to the output terminal of the corresponding cell stack such that currents flowing in the cell stacks become the same according to the measured current values.

In accordance with the present invention, an apparatus for battery equalization of a battery pack for use in a vehicle includes cell stack separators, cell balancers, current measuring devices and cell stack resistance controllers. The battery pack includes a power supply system, a plurality of cells and a plurality of cell stacks. Each cell stack includes an output terminal and a plurality of the cells connected in series. The cell stacks are connected in parallel to form the battery pack. Each cell stack separator is adapted to separate the corresponding cell stack from the power supply system if the difference between the maximum and the minimum of calculated internal resistances of the cells in the cell stack is greater than a predetermined threshold value. Each cell balancer is adapted to perform a battery equalization control for the cells in the separated cell stack. Each current measuring device is adapted to measure a current flowing in the corresponding cell stack. Each cell stack resistance controller includes a resistance unit. Each cell stack resistance controller is adapted to control a resistance value of the resistance unit that is connectable in series to the output terminal of the corresponding cell stack such that currents flowing in the cell stacks become the same according to the measured current values.

In accordance with the present invention, the battery pack includes a power supply system, a plurality of cells and a plurality of cell stacks each of which includes a plurality of the cells connected in series. The cell stacks are connected in parallel to form the battery pack. A method for battery equalization of the battery pack for use in a vehicle includes the steps of separating the cell stack from the power supply system if the difference between the maximum and the minimum of calculated internal resistances of the cells in the cell stack is greater than a predetermined threshold value and performing a battery equalization control for the cells in the separated cell stack.

In accordance with the present invention, the battery pack includes a power supply system, a plurality of cells and a plurality of cell stacks each of which includes an output terminal and a plurality of the cells connected in series. The cell stacks are connected in parallel to form the battery pack. A method for battery equalization of a battery pack for use in a vehicle includes the steps of measuring currents flowing in the cell stacks and controlling resistance values of resistance units each connectable in series to the output terminal of the corresponding cell stack such that currents flowing in the cell stacks become the same according to the measured current values.

In accordance with the present invention, the battery pack includes a power supply system, a plurality of cells and a plurality of cell stacks each of which includes an output terminal and a plurality of the cells connected in series. The cell stacks are connected in parallel to form the battery pack. A method for battery equalization of the battery pack for use in a vehicle includes the steps of separating the cell stack from the power supply system if the difference between the maximum and the minimum of calculated internal resistances of the cells in the cell stack is greater than a predetermined threshold value, performing a battery equalization control for the cells in the separated cell stack, measuring currents flowing in the cell stacks and controlling resistance values of resistance units each connectable in series to the output terminal of the corresponding cell stack such that currents flowing in the cell stacks become the same according to the measured current values.

Other aspects and advantages of the invention will become apparent from the following description, taken in conjunction with the accompanying drawings, illustrating by way of example the principles of the invention.

### BRIEF DESCRIPTION OF THE DRAWINGS

The invention together with objects and advantages thereof, may best be understood by reference to the following description of the presently preferred embodiments together with the accompanying drawings in which:
Fig. 1 is a schematic view showing a battery system according to a preferred embodiment of the present invention;
Fig. 2 is fragmentary schematic configuration view of the battery system of Fig. 1 showing cell stack balancing device, current measuring devices and part of cell stacks of the battery system, and
Fig. 3 is a flow chart illustrating a procedure of a battery equalization control for cells in the cell stacks of the battery system of Fig. 1.

### DETAILED DESCRIPTION OF THE PREFERRED EMBODIMENT

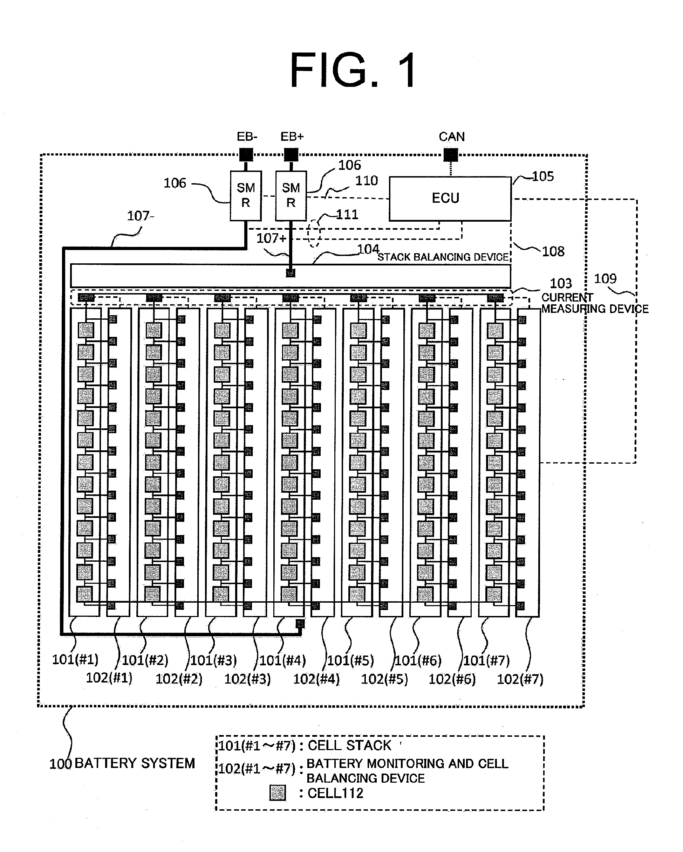

The following will describe a preferred embodiment of the present invention with reference to Figs. 1 through 3. Fig. 1 shows in a schematic view a battery system according to a preferred embodiment of the present invention and the battery system is designated by reference numeral 100. Referring to Fig. 1, the battery system 100 is provided by an battery pack adapted for use in a vehicle and composed of a plurality of cell stacks 101 which are designated respectively by the references 101(#1) through 101 (#7) and connected in parallel. Each cell stack 101 includes a plurality of cells 112, or tens of to hundreds of the cells 112, which are connected in series.

The number of the cell stacks 101 connected in parallel, or seven cell stacks 101(#1 through #7) in the preferred embodiment of the present invention, is set large enough for the vehicle to have the required power capacity for a vehicle. A plurality of battery monitoring and cell balancing devices 102 (#1 through #7) are connected to the cell stacks 101 (#1 through #7), respectively. Each battery monitoring and cell balancing device 102 has a plurality of voltage measuring devices each of which is adapted to measure a voltage between across the cell 112 in the cell stack 101 and to send a signal that is indicative of the measured voltage to an electrical control unit (ECU) 105 through a control line 109. The voltage measuring devices are indicated by the black squares in each battery monitoring and cell balancing device 102 in Fig. 1. The battery monitoring and cell balancing device 102 has a plurality of cell balancers adapted to perform a battery equalization control for any selected pair of two adjacent selected cells 112 in each cell stack 101 based on a control signal received from the ECU 105 through the control line 109.

The negative terminal of the cell stack 101 is connected to a negative electrode terminal EB- through a negative-side power line 107- and a system main relay (SMR) 106.

The battery system 100 has a plurality of current measuring devices 103 each being assigned to a respective one of the cell stacks 101. The positive terminal of each cell stack 101 is connected to one end of its corresponding current measuring device 103. Each of the current measuring devices 103 (#1 through #7) is adapted to measure the electrical current flowing through its corresponding cell stack 101 and send to the ECU 105 a signal indicative of the measured current through the corresponding battery monitoring and cell balancing device 102 (#1 through #7).

The other end of each current measuring device 103 is connected to a stack balancing device 104. The stack balancing device 104 is adapted to separate one or more selected cell stacks 101 from the positive-side power line 107+ based on a signal received from the ECU 105 through the control line 108. The stack balancing device 104 is also adapted to control the resistance valve of a resistor unit connected in series to each positive terminal of the cell stack 101.

The other end of the stack balancing device 104 is connected to a positive electrode terminal EB+ through the positive-side power line 107+ and the SMR 106. The ECU 105 controls the stack balancing device 104, the battery monitoring and cell balancing devices 102 and the current measuring devices 103 through the control lines 108, 109. The ECU 105 is adapted to measure the voltage and the current between the positive-side power line 107+ and the negative-side power line 107- through control lines 111. The ECU 105 also controls the SMRs 106 through control lines 110 so as to connect the battery system 100 to the positive and the negative electrode terminals EB+, EB- or to disconnect the battery system 100 from the positive and the negative electrode terminals EB+, EB-. The ECU 105 is connected to an upper control system through an interface terminal CAN.

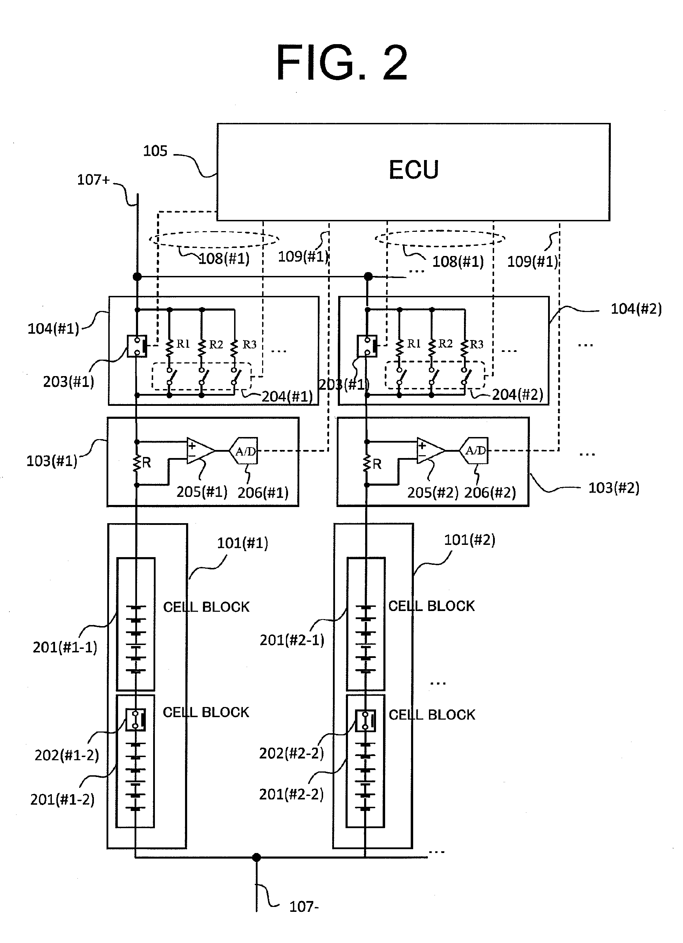

Fig 2 is a fragmentary schematic view showing the stack balancing devices 104, the current measuring devices 103 and the cell stacks 101 of the battery system 100 in Fig. 1. Although each of the cell stacks 101 (#1) through 101 (#7) has a plurality of the cells 112 connected in series as shown in Fig. 1, alternatively the cells 112 in each cell stack 101 may be arranged in a plurality of groups of cell blocks 201(#1-1), 201(#1-2), 201(#2-1), 201(#2-2), as shown in Fig. 2. In the example of Fig. 2, one cell stack 101 includes two cell blocks 201 and each cell block 201 includes a plurality of cells connected in series. Alternatively, it may so arranged that the second cell blocks 201(#1-2), 201(#2-2) may have switches 202(#1-2),202(#2-2) that are operated to separate the first cell blocks 201(#1-1) and 201(#2-1) from the other cell blocks 201. Furthermore, it may so arranged that the second cell blocks 201(#1-2), 201(#2-2) may perform the battery equalization control between the cell blocks 201. In Fig. 2, numeral 203 designates a cell stack separator disposed in the stack balancing device 104 and operable to separate the cell stack 101 from a power supply system or a positive-side power line 107+.

The ECU 105 receives from the battery monitoring and cell balancing devices 102 signals that are indicative of voltage and temperature of the cells 112 of the respective cell stacks 101. The ECU 105 also receives from the current measuring devices 103 signals that are indicative of the measured current flowing through the respective cell stacks 101. Based on these measurements, the ECU 105 calculates the internal resistance of each cell 112 of the cell stack 101. Then, the ECU 105 controls the cell stack separator 203 through the control line 108 so as to separate the cell stack 101 from the power supply system or the positive-side power line 107+. The ECU 105 controls the battery monitoring and cell balancing device 102 connected to the separated cell stack 101 so as to allow the battery equalization control to be performed for equalizing the cells in the separated cell stack 101.

In the preferred embodiment, the number of the cell stacks 101 connected in parallel is set to an extent that is far enough for the required power capacity for a vehicle. With one or more cell stacks 101 separated from the power supply system, and the ECU 105 performs the battery equalization control for the separated cell stacks 101. Therefore, one or more selected cell stacks 101 may be separated from the power supply system and the battery equalization control may be performed for the selected cell stacks 101 while the vehicle is running.

Referring to Fig. 2, the current measuring devices 103(#1), 103(#2) measure the electrical current flowing in the cell stacks 101(#1), 101(#2), respectively. More specifically, each current measuring device 103 includes a resistor R, a difference amplifier 205 adapted to measure the voltage between the ends of the resistor R and an analog-digital (A/D) converter 206 adapted to convert voltage outputted in analog value by the difference amplifier 205 into voltage of digital value. The digital voltage value outputted by the A/D converter 206 is transmitted to the ECU 105 through the battery monitoring and cell balancing device 102 and the control line 109. The ECU 105 calculates the electrical current flowing through each cell stack 101 by dividing the digital voltage value outputted by each current measuring device 103 by the resistance value of the resistor R. Each stack balancing device 104 functions as a cell stack resistance controller. That is, according to the electrical current flowing in each cell stack 101 and measured by the current measuring device 103, the stack balancing device 104 controls the resistance of the resistor connected in series to the output terminal of the cell stack 101 such that the currents flowing in the cell stacks 101 become substantially the same. More specifically, each stack balancing device 104 includes three resistors R1, R2, R3 having different resistances. Each stack balancing device 104 further includes switches 204(#1), 204(#2) for the resistors R1, R2, R3, respectively, which are selectively operable to be closed according to the measured values of the current flowing in the cell stacks 101, thereby to connect any one of the resistors R1, R2, R3 in series to the output terminal of its corresponding cell stack 101 so that the cell stacks 101 have substantially the same current value. The switches 204 are controlled by the ECU 105 through the control lines 108(#1), 108(#2).

According to the preferred embodiment of the present invention, each stack balancing device 104 functioning as a cell stack resistance controller controls the current flowing in each cell stack 101 such that the currents flowing in the cell stacks 101 have substantially the same value. Thus, flowing of an excess current may be prevented without using a fuse in each cell stack 101 and circulation of current between any two adjacent cell stacks 101 may also be prevented.

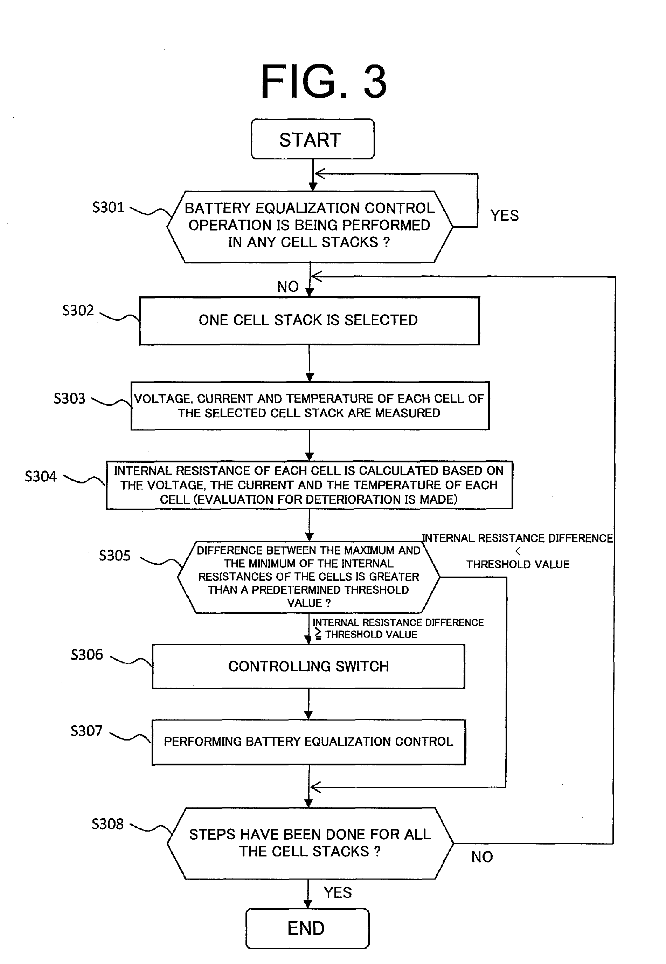

Fig. 3 is a flow chart illustrating a procedure for the battery equalization control performed by the ECU 105 according the preferred embodiment of the present invention. The battery equalization control of the flow chart of Fig. 3 is accomplished by execution of a control program stored in a memory (not shown) provided in the ECU 105 by a central processing unit (CPU) (not shown either) also provided in the ECU 105.

The battery equalization control operation illustrated by the flow chart is performed at a predetermined time interval. At step S301, the ECU 105 determines whether or not the battery equalization control operation is being performed in any cell stacks 101. If YES at step S301, the determination is repeated until the determination at step S301 becomes NO.

If NO at step S301, one cell stack 101 is selected at step S302. Subsequently, at step S303, the voltage, the current and the temperature of each cell 112 of the selected cell stack 101 are measured by the battery monitoring and cell balancing device 102 connected to the selected cell stack 101.

At step S304, the ECU 105 calculates the internal resistance of each cell 112 based on the voltage, the current and the temperature of each cell 112 determined at step S303. In this step, evaluation for the deterioration of each cell 112 is made based on the calculated internal resistance of each cell 112.

At step S305, the ECU 105 determines whether or not the difference between the maximum and the minimum of the calculated internal resistances of the cells 112 is greater than a predetermined threshold value. If NO at step S305, it is judged that the battery equalization control is not required for the selected cell stack 101 and the process proceeds to step S308.

If YES at step S305, the ECU 105 controls the cell stack separator 203 of the stack balancing device 104 connected to the selected cell stack 101 through the control line 108 such that the selected cell stack 101 is separated from the power supply system or the positive-side power line 107+.

At step S307, the ECU 105 controls the battery monitoring and the cell balancing device 102 connected to the separated cell stack 101 such that the battery equalization control is performed for the cells 112 of the separated cell stack 101.

After the process at step S307 is ended or the determination at step S305 is NO, the ECU 105 determines at step S308 whether or not the steps S302 through S307 have been done for all the cell stacks 101.

If NO at step S308, the process returns to step S302 and another cell stack 101 is selected at step S302. Thus, steps S302 through S308 are repeatedly performed. If YES at step S308, the whole process of the battery equalization control ends.

According to the preferred embodiment of the present invention, one or more cell stacks 101 may be selected and separated from the power supply system and the battery equalization control may be performed for the selected and separated cell stacks 101 while a vehicle is running.

An apparatus for battery equalization of a battery pack for use in a vehicle includes cell stack separators and cell balancers. The battery pack includes a power supply system, a plurality of cells and a plurality of cell stacks. Each cell stack includes a plurality of the cells connected in series. The cell stacks are connected in parallel to form the battery pack. Each cell stack separator is adapted to separate the corresponding cell stack from the power supply system if the difference between the maximum and the minimum of calculated internal resistances of the cells in the cell stack is greater than a predetermined threshold value. Each cell balancers is adapted to perform a battery equalization control for the cells in the separated cell stack.

## Claims

1. An apparatus for battery equalization of a battery pack (100) for use in a vehicle, the battery pack (100) including a power supply system, a plurality of cells (112) and a plurality of cell stacks (101), each cell stack (101) including a plurality of the cells (112) connected in series, the cell stacks (101) connected in parallel to form the battery pack (100), the apparatus comprising:
cell stack separators (203) each of which is adapted to separate the corresponding cell stack (101) from the power supply system if the difference between the maximum and the minimum of calculated internal resistances of the cells (112) in the cell stack (101) is greater than a predetermined threshold value; and
cell balancers (102) each of which is adapted to perform a battery equalization control for the cells (112) in the separated cell stack (101).

2. The apparatus according to claim 1, **characterized in that** the number of the cell stacks (101) connected in parallel is set to an extent that is far enough for a required power capacity for a vehicle.

3. The apparatus according to claim 1 or 2, **characterized in that** the internal resistance of each cell (112) is calculated based on a voltage, a current and a temperature of the cell (112) in each cell stack (101).

4. An apparatus for battery equalization of a battery pack (100) for use in a vehicle, the battery pack (100) including a power supply system, a plurality of cells (112) and a plurality of cell stacks (101), each cell stack (101) including an output terminal and a plurality of the cells (112) connected in series, the cell stacks (101) connected in parallel to form the battery pack (100), the apparatus comprising:
current measuring devices (103) each of which is adapted to measure a current flowing in the corresponding cell stack (101); and
cell stack resistance controllers (104) each of which includes a resistance unit, each cell stack resistance controller (104) adapted to control a resistance value of the resistance unit that is connectable in series to the output terminal of the corresponding cell stack (101) such that currents flowing in the cell stacks (101) become the same according to the measured current values.

5. The apparatus according to claim 4, **characterized in that** the cell stack resistance controller includes the resistance unit that includes a plurality of resistors (R1, R2, R3) having different resistance values and a switch (204) selectively operable to be closed according to the measured values of the current flowing in the cell stacks (101) to connect any one of the resistors (R1, R2, R3) in series to the output terminal of the corresponding cell stack (101) such that currents flowing in the cell stacks (101) become the same according to the measured current values.

6. An apparatus for battery equalization of a battery pack (100) for use in a vehicle, the battery pack (100) including a power supply system, a plurality of cells (112) and a plurality of cell stacks (101), each cell stack (101) including an output terminal and a plurality of the cells (112) connected in series, the cell stacks (101) connected in parallel to form the battery pack (100), the apparatus comprising:
cell stack separators (203) each of which is adapted to separate the corresponding cell stack (101) from the power supply system if the difference between the maximum and the minimum of calculated internal resistances of the cells (112) in the cell stack (101) is greater than a predetermined threshold value;
cell balancers (102) each of which is adapted to perform a battery equalization control for the cells (112) in the separated cell stack (101);
current measuring devices (103) each of which is adapted to measure a current flowing in the corresponding cell stack (101); and
cell stack resistance controllers (104) each of which includes a resistance unit, each cell stack resistance controller (104) adapted to control a resistance value of the resistance unit that is connectable in series to the output terminal of the corresponding cell stack (101) such that currents flowing in the cell stacks (101) become the same according to the measured current values.

7. A method for battery equalization of a battery pack (100) for use in a vehicle, the battery pack (100) including:
a power supply system;
a plurality of cells (112); and
a plurality of cell stacks (101) each of which includes a plurality of the cells (112) connected in series, the cell stacks (101) connected in parallel to form the battery pack (100),
the method **characterized by** the steps of:
separating the cell stack (101) from the power supply system if the difference between the maximum and the minimum of calculated internal resistances of the cells (112) in the cell stack (101) is greater than a predetermined threshold value; and
performing a battery equalization control for the cells (112) in the separated cell stack (101).

8. The method according to claim 7, wherein the number of the cell stacks (101) connected in parallel is set to an extent that is far enough for a required power capacity for a vehicle.

9. The method according to claim 7 or 8, wherein the internal resistance of each cell (112) is calculated based on a voltage, a current and a temperature of the cell (112) in each cell stack (101).

10. A method for battery equalization of a battery pack (100) for use in a vehicle, the battery pack (100) including:
a power supply system;
a plurality of cells (112); and
a plurality of cell stacks (101) each of which includes an output terminal and a plurality of the cells (112) connected in series, the cell stacks (101) connected in parallel to form the battery pack (100),
the method **characterized by** the steps of:
measuring currents flowing in the cell stacks (101); and
controlling resistance values of resistance units each connectable in series to the output terminal of the corresponding cell stack (112) such that currents flowing in the cell stacks (112) become the same according to the measured current values.

11. The method according to claim 10, wherein the step of controlling the resistance values is performed by connecting any one of a plurality of resistors (R1, R2, R3) of the resistance unit having different resistance values in series to the output terminal of the corresponding cell stack (101) such that currents flowing in the cell stacks (101) become the same according to the measured current values.

12. A method for battery equalization of a battery pack (100) for use in a vehicle, the battery pack (100) including:
a power supply system;
a plurality of cells (112); and
a plurality of cell stacks (101) each of which includes an output terminal and a plurality of the cells (112) connected in series, the cell stacks (101) connected in parallel to form the battery pack (100),
the method **characterized by** the steps of:
separating the cell stack (101) from the power supply system if the difference between the maximum and the minimum of calculated internal resistances of the cells (112) in the cell stack (101) is greater than a predetermined threshold value;
performing a battery equalization control for the cells (112) in the separated cell stack (101);
measuring currents flowing in the cell stacks (101); and
controlling resistance values of resistance units each connectable in series to the output terminal of the corresponding cell stack (101) such that currents flowing in the cell stacks (101) become the same according to the measured current values.
